Europäisches Patentamt

European Patent Office

Office européen des brevets

(19)

(11) Publication number: **0 392 778 B1**

## EUROPEAN PATENT SPECIFICATION

(12)

(45) Date of publication of patent specification: **20.07.94**  (51) Int. Cl.⁵: **C09C 3/00**, C09C 1/42, C09B 67/54

(21) Application number: **90303789.3**

(22) Date of filing: **09.04.90**

(54) **Production process of purified pigments, and purified pigments.**

(30) Priority: **10.04.89 JP 91266/89**

(43) Date of publication of application:
**17.10.90 Bulletin 90/42**

(45) Publication of the grant of the patent:
**20.07.94 Bulletin 94/29**

(84) Designated Contracting States:
**DE FR GB**

(56) References cited:
**EP-A- 0 245 553**
**GB-A- 2 025 914**

**CHEMICAL ABSTRACTS, vol. 85, no. 4, page 78, 26 July 1976, Columbus, Ohio, US; ref. no. 22854P; & SU-A-510494**

(73) Proprietor: **FINE CLAY CO., LTD.**
**3-8 Oshokita 1-chome**
**Amagasaki-shi, Hyogo-ken(JP)**

Proprietor: **KIMOTO & CO., LTD.**
**9-22 Shinjuku 2-chome,**
**Shinjuku-ku**
**Tokyo(JP)**

(72) Inventor: **Furuno, Nobuo**
**3-8 Oshokita 1-chome**
**Amagasaki-shi, Hyogo-ken(JP)**

(74) Representative: **Jones, Helen Marjorie Meredith et al**
**Gill Jennings & Every,**
**Broadgate House,**
**7 Eldon Street**
**London EC2M 7LH (GB)**

Rank Xerox (UK) Business Services
(3.10/3.09/3.3.3)

EP 0 392 778 B1

## Description

The present invention relates to a process for the production of purified pigments, in which fine particles of the opposite polarity, electrolyte ions and the like have been either completely or partly eliminated so that the purified pigment will not become a hard cake in a slurry state and will hardly undergo secondary aggregation even when dried.

Further, the present invention also relates to a process for their production.

According to the present invention, a pigment can be sedimented, concentrated and recovered from an aqueous dispersion of particles of the pigment. The process of the present invention either obviates or reduces the need for mechanical dispersion processing which is generally required to disintegrate aggregates of pigment particles, so that a purified pigment can be furnished without modifying or impairing characteristics of the pigment particles such as polarity, shape, particle size, and electrical and magnetic properties.

Purified pigments according to the present invention can be used in a wide range of industrial fields, including ceramics, paper, paints, rubbers, plastics, medicines, cosmetics and the like.

Description of the Related Art:

Grinding and classification operations are particularly important in the production of a pigment, because functions of the pigment such as coloring power and hiding power are governed by its particle size and its particle size distribution.

In mechanical grinding such as wet grinding or dry grinding, division of particles by the grinding competes with aggregation of the same by the grinding when the particle size of the pigment becomes several micrometers or smaller. It is therefore difficult to obtain so-called submicron particles as primary particles.

Classification methods for pigments can be divided roughly into hydraulic elutriation methods which use water as a classifying medium and air elutriation methods which employ air as a classifying medium. Due to aggregation of fine particles of several micrometers and smaller, the conventional methods have difficulties in effectively classifying particles of such a small size range.

In the classification of a pigment by a conventional hydraulic elutriation method, an aqueous dispersion in which the pigment has been deflocculated by the addition of a deflocculant is used. The aqueous dispersion is allowed to stand for a certain period of time and by utilizing differences in sedimentation velocity among pigment particles of different particle sizes, a portion of the resulting aqueous dispersion, said portion being located in a predetermined height range, is collected. A coagulant such as sulfuric acid, hydrochloric acid, phosphoric acid or chlorine gas is then added to the thus-collected dispersion, whereby the pigment is coagulated and sedimented and is thereafter recovered.

The use of such coagulant and deflocculant however results in the inclusion of various electrolyte ions in pigment particles even after they are washed, so that the electrical characteristics and the like of the pigment are impaired. Further, the conventional pigment production processes cannot avoid the inclusion of electrolyte ions. A pigment slurry coagulated by the addition of a coagulant tends to take the form of a hard cake, whose re-dispersion is difficult. Moreover, when a pigment containing electrolyte ions is mixed, for example, in a paint, adverse effects are developed, including corrosion and rusting of the coated metal and deterioration of the coating.

Pigment particles are usually produced and sold as dry powder. Since these pigment particles are in an aggregated or caked form, they are re-dispersed by a dispersing machine such as a sand mill before use. The pigment particles are however ground beyond necessity due to the use of the dispersing machine, thereby leading to the problem that when the pigment has a characteristic feature in the crystalline shape such as a plate or needle shape, this characteristic feature is impaired, modified or lost. Moreover, such over-grinding is uneconomical from the standpoint of energy.

A description will next be made of the classification of a pigment. Classification of so-called coarse particles can be suitably effected by hydraulic elutriation or air elutriation. It is however difficult to effect elutriation for fine particles in the particle size range of several micrometers and smaller. No suitable classification method has therefore been proposed yet.

Particles in this small particle size range account for a very small fraction of the whole pigment particles as long as the fraction is by weight. When this fraction is considered in terms of the number of particles, these fine particles account for an extremely large fraction and hence give great effects to the physical properties of the pigment.

This small particle size range is generally ignored, because it is believed to be practically impossible to classify fine particles of several micrometers and smaller and ultrafine particles of several nanometers and smaller such as molecules, atoms and ions.

Incidentally, the International Society of Pedology defines that when rocks are subjected to weathering, they are divided in the following order: conglomerates → coarse sand (2 mm ≥ d > 0.2 mm) → fine sand (0.2 mm ≥ d > 0.02 mm) → silt (0.02 mm ≥ d > 0.002 mm (2 $\mu$m)) → clay (d ≤ 0.002 mm (2 $\mu$m)). The wide range from 2 $\mu$m to the diameters of molecules, atoms and ions of 1/10,000 of 2 $\mu$m and smaller (i.e., 2 nm and smaller) is not divided further and remains undivided. The lack of any division for the range of 2 $\mu$m and smaller can be attributed to the difficulties in classifying particles beyond 2 $\mu$m. Therefore, any attempt of classification of fine pigment particles of 2 $\mu$m and smaller is, as a matter of fact, considered to belong to an uninvestigated field.

The recovery of pigment particles in a classifying operation by hydraulic elutriation at an actual industrial site is conducted by using a coagulant such as an acidic material, e.g., phosphoric acid, sulfuric acid, hydrochloric acid or chlorine gas, or a polyelectrolyte. Under the circumstances, the mixing and remaining of such an ionizable chemical material in pigment particles are considered to be unavoidable.

As has been described above, the conventional production processes of pigments do not include any effective means for obtaining a concentrate of pigment particles which does not become a hard cake or dry pigment particles which can be readily re-dispersed.

Due to the lack of any effective means for the classification of particles in the fine particle size range, it has been extremely difficult to improve or modify the physical properties of a pigment.

Moreover, because of the inevitable inclusion of electrolyte ions, it has been impossible to avoid the occurrence of secondary aggregation and/or the deterioration of electrical characteristics.

In the conventional recovery methods which use an aggregating agent such as a coagulant or flocculant, various fine particles charged in opposite polarity to pigment particles also sediment along with the pigment particles. Accordingly, the inclusion of these fine particulate impurities cannot be avoided.

## OBJECTS AND SUMMARY OF THE INVENTION

An object of the present invention is to provide a process for the production of a purified pigment which can be recovered or concentrated without using an aggregating agent such as a coagulant or flocculant and from which electrolyte ions have been completely or partly eliminated, and also to provide such a purified pigment.

Another object of the present invention is to provide a purified pigment which will not become a hard cake when left over in the form of a slurry and which will undergo no substantial secondary aggregation even after it is dried.

A further object of the present invention is to provide a process for the production of a highly-classified purified pigment, especially a purified pigment classifiable even in the fine particle range of several micrometers and smaller by clarifying, as a quality-related characteristic of pigment particles, whether the pigment is acidic or basic, and also to provide such a purified pigment.

The present inventor has proceeded with an extensive investigation with a view toward overcoming the above-described problems of the conventional techniques. As a result, it has been found that a purified pigment - from which electrolyte ions and particles of opposite polarity, said particles being contained as impurities in an aqueous dispersion of pigment particles, have been completely or partly eliminated and which will not become a hard cake even when left over in the form of a slurry and will undergo no substantial secondary aggregation even after dried - can be obtained by bringing the aqueous suspension of the pigment particles into contact with an H-type cation-exchange resin or an OH-type anion-exchange resin, having associated counter ions exchanged and lowering or raising the pH of the aqueous dispersion, and hence destroying the dispersion stability of the pigment particles and having the pigment particles sedimented and separated (this process will hereinafter be called the "ion-exchange treatment for destroying the stability of the dispersion stability of pigment particles" or in short, the "stability-destroying ion-exchange treatment" ).

The present inventor has also found that an aqueous dispersion with pigment particles highly deflocculated therein can be obtained by bringing water to be used for the preparation of an aqueous dispersion of pigment particles and/or an aqueous dispersion of pigment particles into contact with (a) an OH-type anion-exchange resin where the pigment particles are acidic particles, thereby exchanging anions, which are present in the water and/or the aqueous dispersion, with OH$^-$ to raise the pH of the water and/or the aqueous dispersion or (b) an H-type cation-exchange resin where the pigment particles are basic particles, thereby exchanging cations, which are present in the water and/or the aqueous dispersion, with H$^+$

to lower the pH of the water and/or the aqueous dispersion (this process will hereinafter be called the "ion-exchange treatment for deflocculating pigment particles" or in short, the "deflocculating ion-exchange treatment").

It has also been found that a purified pigment from which electrolyte ions have been more effectively eliminated can be obtained when the above operation, namely, the ion-exchange treatment for destroying the dispersion stability of pigment particles is conducted using an aqueous dispersion of pigment particles, said aqueous dispersion having been obtained by conducting the ion-exchange treatment for deflocculating the pigment particles.

It has also been found that a purified pigment highly classified even in the range of fine particles can be obtained when a classifying operation is conducted, while utilizing differences in sedimentation velocity, on an aqueous dispersion of pigment particles, said aqueous dispersion having been obtained by conducting the ion-exchange treatment for deflocculating the pigment particles and the thus-collected (-fractionated) aqueous dispersion is subjected to the aforementioned operation, namely, to the ion-exchange treatment for destroying the dispersion stability of the pigment particles.

The present invention has been completed on the basis of these findings.

In one aspect of the present invention, there is thus provided a process for the production of a purified pigment, which comprises bringing an aqueous dispersion of pigment particles into contact with (a) an H-type cation-exchange resin where the pigment particles are acidic particles and counter ions thereof are cations, thereby having the counter ions exchanged with $H^+$ ions and lowering the pH of the aqueous dispersion or (b) an OH-type anion-exchange resin where the pigment particles are basic particles and counter ions thereof are anionic, thereby having the counter ions exchanged with $OH^-$ ions and raising the pH of the aqueous dispersion, whereby the dispersion stability of the pigment particles is destroyed to have the pigment particles sedimented and separated without fine particles of opposite polarity contained as impurities in the aqueous dispersion.

In another aspect of the present invention, there is also provided a process for the production of a purified pigment, which comprises bringing water, which is to be used for the preparation of an aqueous dispersion of pigment particles, into contact with (a) an OH-type anion-exchange resin where the pigment particles are acidic particles, thereby exchanging anions, which are present in the water, with $OH^-$ to raise the pH of the water or (b) an H-type cation-exchange resin where the pigment particles are basic particles, thereby exchanging cations, which are present in the water, with $H^+$ to lower the pH of the water, using the pH-adjusted water and preparing an aqueous dispersion with the pigment particles deflocculated therein, and then conducting the stability-destroying ion-exchange treatment to have the pigment particles sedimented and separated.

In a further aspect of the present invention, there is also provided a process for the production of a purified pigment, which comprises subjecting an aqueous solution of pigment particles to the deflocculating ion-exchange treatment and then conducting the stability-destroying ion-exchange treatment to highly deflocculate the pigment particles.

In a still further aspect of the present invention, there is also provided a process for the production of a highly-classified purified pigment, which comprises classifying an aqueous dispersion of pigment particles, which has been obtained by conducting the deflocculating ion-exchange treatment, while utilizing differences in sedimentation velocity and then conducting the stability-destroying ion-exchange treatment.

In a still further aspect of the present invention, there is also provided, in a dry form or in a slurry-like or cream-like concentrate, a purified pigment obtained by any one of such production processes.

## DETAILED DESCRIPTION OF THE INVENTION

(Definition)

The term "pigment" as used herein embraces particles having a particle size not greater than 20 $\mu$m, preferably not greater than 2 $\mu$m, irrelevant to whether they are organic or inorganic or natural or synthetic, and not limited to those having coloring function but including those having one or more of various functions.

The term "water" which is employed as a medium for dispersing pigment particles include various waters used in the production of pigments, such as underground water, river water, rain water and city water. They may also contain a hydrophilic organic solvent such as an alcohol, if necessary.

4

(Ion-Exchange Treatment of Counter Ions)

The first aspect of the present invention provides a suitable means for controlling ions having opposite charge to the surface charge of pigment particles, said ions playing an important role in the stabilization of an aqueous dispersion of pigment particles (i.e., the dispersion stability of the pigment particles) and being called "counter ions".

In the present invention, pigment particles to be dealt with are roughly divided into either acidic particles or basic particles. In an aqueous dispersion, pigment particles tend to strongly attract, as counter ions, cations such as sodium ions on their surfaces where the pigment particles are acidic particles or anions such as chlorine ions on their surfaces where the pigment particles are basic particles, whereby double ionic layers are formed on each pigment particle, one being a layer of surface charges and the other a layer of counter ions.

Accordingly, the aqueous dispersion of the pigment particles is stabilized owing to the presence of these counter ions. In particular, an aqueous dispersion added with a deflocculant or a dispersant is dispersed in a stabilized state or is deflocculated because of counter ions yielded from such an additive.

When deflocculated, the pigment particles carry, as counter ions, cations such as $Na^+$ ions attracted around the pigment particles as macro ions when the pigment particles are acidic particles (solid acid). Due to the presence of these counter ions, the dispersion stability of the pigment particles is ensured so that they can independently and freely sediment depending on their characteristics such as particle sizes and shapes.

Upon recovery of pigment particles from an aqueous dispersion of the same or upon classification of pigment particles by hydraulic elutriation, a coagulant, which is an electrolyte, has conventionally been added to the aqueous dispersion to coagulate the pigment particles.

According to the process of the present invention, when pigment particles are acidic particles, counter ions are cations and their aqueous dispersion is, for example, alkaline, i.e., of pH 8-13, the aqueous dispersion is treated with an H-type cation-exchange resin to have the counter ions exchanged with $H^+$ ions, so that the pH of the aqueous dispersion is lowered to 6 or lower, preferably 5 or lower, more preferably 4 or lower.

When the resulting aqueous dispersion is treated with an H-type cation-exchange resin, the counter ions are exchanged with $H^+$ ions. These $H^+$ ions then couple with $OH^-$ ions to form $H_2O$ molecules, so that the counter ions are decreased to the ion product of water, $[H^+] \cdot [OH^-] = 10^{-14}$. As a result, the counter ions, $Na^+$, are eliminated and the pH of the dispersion is lowered, whereby the dispersion stability of the pigment particles is destroyed and the acidic pigment particles are only caused to sediment.

When the pigment particles are basic particles (solid base), the pigment particles are in a state surrounded by counter ions, i.e., anions such as $Cl^-$ in the dispersion.

When the aqueous dispersion whose pH is generally 6 or lower is treated with an OH-type anion-exchange resin, the counter ions are exchanged with $OH^-$ ions. As a result, electrolyte ions, namely, anions such as $Cl^-$ are eliminated so that the pH of the dispersion arises to 8 or higher, preferably 9 or higher, more preferably 10 or higher. The dispersion stability of the pigment particles is thus destroyed, whereby the basic pigment particles are only caused to sediment.

The pigment particles thus sedimented without counter ions will not become a hard cake even when left over in the form of a slurry and will be prevented from secondary aggregation even after dried.

According to these ion-exchange treatments, the pH can be adjusted without increasing electrolytes because no coagulant is added. It is surprisingly that pigment particles easily sediment without the addition of any coagulant when counter ions are eliminated by ion exchange. It has not been fully elucidated why such sedimentation takes place. Ions charged in opposite polarity to the counter ions still remain at a concentration of from several ppm to several hundred ppm. These ions appear to contribute to the sedimentation of the pigment particles. In addition, fine particles of impurities, which are charged in opposite polarity to the pigment particles, remain in the dispersion without sedimentation. These remaining ions can be eliminated by separating and concentrating the sediment.

(Deflocculation of Pigment Particles by Ion-Exchange Treatment)

In the second aspect of the present invention, an aqueous dispersion in which pigment particles have been deflocculated by ion-exchange treatment is used.

Namely, an aqueous dispersion with pigment particles highly deflocculated therein is obtained by bringing water and/or an aqueous dispersion of pigment particles into contact with (a) an OH-type anion-exchange resin where the pigment particles are acidic particles, thereby exchanging anions, which are present in the water and/or the aqueous dispersion, with OH⁻ to raise the pH of the water and/or the aqueous dispersion (to about pH 8-13) or (b) an H-type cation-exchange resin where the pigment particles are basic particles, thereby exchanging cations, which are present in the water and/or the aqueous dispersion, with H⁺ to lower the pH of the water and/or the aqueous dispersion (to about pH 1-6).

When the above ion-exchange treatment is conducted using an aqueous dispersion of deflocculated pigment particles obtained by using water adjusted in pH by ion-exchange resin, ions contained in the pigment particles and having the same type of charge as the pigment particles are ion-exchanged so that an aqueous dispersion with pigment particles more highly deflocculated therein can be obtained.

By conducting such ion-exchange treatments, mutual interference among pigment particles dispersed is reduced so that the deflocculated state is promoted.

A purified pigment from which electrolyte ions have been still more effectively eliminated can be obtained by using an aqueous dispersion of pigment particles which has been deflocculated by conducting ion-exchange treatment as described above, and then conducting the above operation, namely, bringing the aqueous dispersion of the pigment particles into contact with an H-type cation-exchange resin or an OH-type anion exchange resin to exchange counter ions, thereby lowering or raising the pH of the aqueous dispersion and destroying the dispersion stability of the pigment particles to have the pigment particles sedimented and separated.

In other words, electrolyte ions can be effectively eliminated when ions other than counter ions are eliminated from an aqueous dispersion of pigment particles by conducting the deflocculating ion-exchange treatment and the counter ions are then subjected to ion-exchange treatment.

(Classification)

By the deflocculating ion-exchange treatment, pigment particles can be effectively deflocculated without the need for addition of a deflocculant or dispersant, whereby the pigment particles can undergo free sedimentation in the aqueous dispersion. When the aqueous dispersion with the pigment particles deflocculated therein is classified by utilizing the differences in sedimentation velocity among the pigment particles, classification is feasible even for fine particles in the range not greater than 2 $\mu$m because the pigment particles have been deflocculated to a high degree.

The term "classification" as used herein means a basic classifying operation in which an aqueous dispersion of pigment particles is left over for a predetermined period of time to allow the pigment particles to undergo natural or gravity sedimentation and an upper portion of the resulting dispersion, said portion being located within a predetermined depth range, is collected. In other words, it is only necessary to calculate the depth range of an upper portion containing particles of a desired particle size in accordance with the Stokes' equation of sedimentation and then collecting the corresponding portion of the dispersion. Incidentally, the classifying operation can be promptly conducted when a centrifugal separator is used instead of relying upon natural or gravity sedimentation.

Classification of pigment particles will next be described in detail in relation to the particle size of the pigment.

When pigment particles consisting primarily of 2 $\mu$m-600 nm particles by way of example are collected by classification, the pigment particles do not contain much particles of 600-200 nm which partly overlap with the wavelength range of visible light. The transparency is therefore increased, thereby making it possible to obtain a characteristic appearance.

Pigment particles whose particle sizes fall within the range of 600-200 nm are closely related to coloring power and hiding power. It is therefore possible to control the degree of luster, appearance and the like if pigment particles in the range of 600-200 nm can be controlled (decreased or increased) among pigment particles.

Turning next to the silt range, improvements of functions such as permeability and breathability can be expected provided that coarse particles of 20 $\mu$m and greater and fine particles of 2 $\mu$m and smaller can be classified out.

Fired and/or sintered products of pigment particles classified precisely as described above are useful as so-called new ceramics.

Pigments featuring particle sizes in a predetermined narrow range, namely, having particle sizes whose upper and lower limits are both defined are expected to find utility as new functional materials now available to date.

(Electrical conductivity)

A sediment of pigment particles obtained in accordance with the present invention is a readily re-dispersible slurry. Water is allowed to freely flow through the sediment and a clear water layer is formed as an upper layer. It is hence possible to accurately measure the electrical conductivity and pH of the medium, i.e., water by utilizing this characteristic feature, so that the electrical conductivity of the water above the sediment can be easily controlled to 100 $\mu$S/cm or lower.

The electrical conductivity of the upper water layer can be controlled to 25 $\mu$S/cm or lower by fully conducting ion-exchange treatment of water or dispersion and further the stability-destroying ion-exchange treatment. The electrical conductivity can be controlled to 2 $\mu$S/cm or lower provided that the ion-exchange treatments are carried out under conditions isolated from the atmosphere.

As has been described above, high-purity pigments can be obtained by the process of the present invention.

If the process of this invention is combined with the technique that pigment particles are gradually added (flushed) while the medium, i.e., water is heated or is caused to boil by depressurizing the production system, the pigment particles are partly or completely sterilized so that an aqueous pigment dispersion free of bubbles can be obtained. This can enhance the effects of the present invention further.

The supernatant (the upper water layer) formed as a result of the sedimentation of the pigment particles is free of electrolyte ions owing to the ion-exchange treatments. The supernatant can therefore be reused as water for the preparation of an aqueous dispersion of pigment particles. This makes it possible to operate the production by a closed system, whereby the production can be efficiently practiced without the problem of pollution by effluent.

(Ion-exchange resin)

Either an H-type cation-exchange resin or an OH-type anion-exchange resin is used as the ion-exchange resin.

These ion-exchange resins have already been known well in the art and commercial products can be used. Upon application, it is necessary to regenerate each ion-exchange resin into H-type or OH-type. No particular limitation is imposed on the rate of regeneration. To conduct a qualitative operation, it is however desired to control regenerating conditions as constant as possible.

As to the particle size of an ion-exchange resin, the greater and the narrower the particle size distribution, the more preferable. It is not necessary to limit the particle size of an ion-exchange resin to any particular range, because any usual commercial product can be chosen for use in the practice of the present invention provided that it is greater than the size of the openings of a resin-retaining screen in an ion-exchange treatment column.

The contact of an aqueous dispersion of pigment particles with an H-type or OH-type ion-exchange resin in the present invention can be effected by passing the aqueous dispersion through an ion-exchange treatment column or a column apparatus, by simple mechanical mixing of the aqueous dispersion and the ion-exchange resin, or by using any other desired method.

(Pigment particles)

Pigment particles usable in the present invention include, but are not particularly limited to, fine particles of the oxides of metals such as magnesium, aluminum, titanium, manganese, iron, nickel, zinc and lead; fine particles of the carbonates of metals such as magnesium, calcium, beryllium and lead; fine particles of clay minerals such as kaolinite, pyrophyllite, bentonite, montmorillonite, imogolite, zeolite, sericite, vermiculite, pearlite, mica, talc, hydrotalcite, and hydrotalcite compounds; organic pigments such as phthalocyanine pigments, quinacridone pigments, azo pigments, thioindigo pigments, anthraquinone pigments, nitro pigments and isoindolinone pigments; fine particles such as silica gel and carbon black; comminuted particles of ion-exchange resins; organic particles such as microgels; etc.

In the present invention, the expression that pigment particles are acidic particles mean that when the pigment particles are formed into an aqueous dispersion, the particles are charged negative (-) and attract cations as counter ions to neutralize the negative charges.

On the other hand, the expression that pigment particles are basic particles mean that when the pigment particles are formed into an aqueous dispersion, the particles are charged positive (+) and attract anions as counter ions to neutralize the positive charges.

Typical acidic particles include kaolinite, pyrophyllite, silica and metal oxides, while typical basic particles include calcium carbonate, lead carbonate, talc and hydrotalcite. It is however to be noted that these pigment particles are often surface-treated. For example, pigment particles which have been made basic by a surface treatment are taken as basic particles even if they are acidic particles before the surface treatment. The question whether pigment particles to be used are acidic particles or basic particles can be easily determined depending on whether the pigment particles are deflocculated or sedimented when an aqueous dispersion of the pigment particles is treated with an H-type cation-exchange resin or with an OH-type anion-exchange resin. When the nature of pigment particles is not certain upon practice of the production process of the present invention, it is therefore only necessary to conduct a provisional experiment by using a small amount of the pigment particles as a sample.

Illustrative of the pigment particles usable in the present invention include various pigment particles, such as those obtained by grinding raw ores, pigments obtained by classification and their aqueous dispersions, effluents containing pigment particles, synthesized organic and inorganic particles, and commercially-available pigments. To effectively conduct purification and classification, it is desirable to use a high dilution rate, for example, to control the concentration of an aqueous dispersion of pigment particles to 5 wt.% or lower, more preferably to 3 wt.% or lower.

As aqueous dispersions of pigment particles, it is possible to use those containing a deflocculant or a dispersant. The use of water and/or an aqueous dispersion, in which ions charged in the same polarity with pigment particles have been exchanged by an H-type cation-exchange resin or an O-type anion-exchange resin, for the deflocculation of pigment particles make it possible to eliminate electrolyte ions and impurity ions still further and moreover, to obtain a highly-classified purified pigment.

The first feature of the present invention resides in the payment of attention to the positive or negative charging of pigment particles and their associated counter ions.

When the pH of an aqueous dispersion of the pigment particles is adjusted by subjecting the counter ions to ion-exchange with an H-type cation-exchange resin or an OH-type anion-exchange resin, the stability of the aqueous dispersion is destroyed so that acidic pigment particles or basic pigment particles are only allowed to sediment easily. Moreover, the resulting pigment will not become a hard cake and even after dried and will undergo no substantial secondary aggregation.

The second feature of the present invention resides in the payment of attention to the order of ion-exchange treatments. First of all, ions other than counter ions in water to be used and/or an aqueous dispersion are subjected to ion-exchange treatment with an H-type cation-exchange resin or an OH-type anion-exchange resin to deflocculate the pigment particles, whereby an aqueous dispersion in a free sedimentation state is prepared. Next, the aqueous dispersion is, either as is or after classified, brought into contact with an H-type cation-exchange resin or an OH-type anion-exchange resin so that the counter ions are subjected to ion-exchange treatment. As a result, the pH of the aqueous dispersion is adjusted to destroy the dispersion stability of the pigment particles, whereby acidic or basic pigment particles are only caused to sediment. It is accordingly possible to obtain a purified pigment from which electrolyte ions and fine particles of impurities have been completely or partly eliminated and whose polarity has been rendered consistent to either acidic or basic. The purified pigment will not become a hard cake and will not undergo any substantial secondary aggregation. Especially, when classified by the method described above, it is possible to obtain a purified pigment classified to a high degree even in the range of fine particles of 2 $\mu$m and smaller.

As a pH adjusting means, the present invention makes use of the method in which anions or cations showing acidity or alkalinity are eliminated by ion-exchange treatment instead of adding a coagulant or the like. The concentration of electrolytes in the entire aqueous dispersion is therefore lowered. Moreover, the deflocculation, sedimentation, separation or high-degree classification of the pigment particles can be carried out under the conditions that the total concentration of electrolytes can be reduced.

According to the process of the present invention, it is possible to precisely adjust the sedimentation velocity of pigment particles, which is determined by the $\zeta$ potential, particle size and specific gravity of the pigment particles. Owing to the treatment by the ion-exchange resin, a quantitative operation is feasible.

The objects of the present invention cannot be attained even when a simple deionization operation is conducted by ignoring the state of positive or negative charging of pigment particles or the associated counter ions.

When pigment particles are dispersed in deionized water by way of example, the pigment particles sediment together so that electrolyte ions deposited on the pigment particles cannot be eliminated to any sufficient extent. Further, the pigment particles cannot be classified because they sediment together.

When an H-type cation-exchange resin and an OH-type anion-exchange resin are used in combination at the same time, the pH of the aqueous dispersion becomes almost neutral so that the pigment particles are caused to sediment. Treatment over a long period of time is therefore indispensable to fully eliminate electrolyte ions deposited on the pigment particles. Since the pigment particles are brought into a sedimented state by this process, their classification is difficult. It may be possible to adjust the mixing ratio of the H-type cation-exchange resin to the OH-type anion-exchange resin to vary the pH in a small-size experiment. It is however extremely difficult to regenerate such a mixed resin and also to maintain the mixing ratio. It is therefore impractical to use the H-type cation-exchange resin and OH-type anion-exchange resin in combination.

The present invention can therefore provide a purified redispersible pigment from which electrolyte ions and fine particles of opposite polarity have been fully or partly eliminated and which will not become a hard cake even when left over in a slurry state and will undergo no substantial secondary aggregation even after dried.

The present invention can also provide a purified pigment whose particle size has been narrowly classified. By this classification, one or more new functions can be derived without modifying the chemical composition.

In addition, the particle size can be controlled even in the submicron range uninvestigated to date, so that the development of new materials is expected.

The process of the present invention can be applied not only to inorganic minerals but also organic materials as long as they have a specific gravity greater than 1. For example, the granulation technique called "microgel", whose development is under way in recent years, also has technical difficulties in classification such as the removal and/or purification of starting monomers and catalyst. The process of the present invention can also be used in these technical fields.

Purified pigments according to the present invention can be suitably used as dry powders or slurries for a wide variety of applications, such as paper and paper-related products, paints, rubbers, plastics, medicines, cosmetics and heat accumulating media.

EMBODIMENTS OF THE INVENTION

The present invention will hereinafter be described specifically by the following examples, comparative examples and referential examples.

(Kaolin)

A description will hereinafter be made of the commercial kaolins used in Examples 1-4 and Comparative Examples 1-4.

Commercial kaolins include those having various particle size distributions. Representative examples (a-d) are shown in Table 1.

The particle size distributions of the commercial kaolins (products of Georgia Kaolin Co., Inc.) shown in Table 1 are values measured by the Coulter's counting method after adding sodium polyphosphate as a deflocculant to aqueous dispersions of the respective kaolins and then exposing the resultant mixtures to ultrasonic waves to sufficiently promote deflocculation. The particle size distributions were measured in the same manner in the subsequent examples and comparative examples.

As one of indices representing the quality of a commercial pigment, the content of particles of 2 $\mu$m and smaller is generally indicated. Those containing particles of 2 $\mu$m and smaller in the range of 85-95 wt.% are considered to be high-grade products. In the case of Product $\underline{a}$ shown in Table 1, the content of particles of 2 $\mu$m and smaller is 92 wt.%. Product $\underline{a}$ is therefore a high-grade product.

Product $\underline{a}$ also contain 9 wt.% of particles in the fine particle size range of 200 nm and smaller. Although the weight fraction is 9 wt.%, these fine particles account for a very large percentage when their fraction is considered in terms of the number of particles. Their influence to the physical properties of the pigment cannot therefore be ignored. However, the classification of particles in the fine particle size range of 200 nm and smaller has heretofore been considered to be impossible.

On the other hand, Product $\underline{d}$ is relatively inexpensive. It contains large particles of 6 $\mu$m and greater in the amount as much as 12 wt.% and fine particles of 600 nm and smaller in the amount of 7 wt.%. The particle size distribution is therefore substantially broad. Such low-grade products are used after they are ground further by dispersion at users' ends. The levels of control of the particle size distributions are however still low because more fine particles are also formed by the mechanical grinding.

Example 1

Twenty kilograms of Product b in Table 1 were used as kaolin. It was gradually added to 1 ton of alkaline water (deflocculant: NaOH) of pH 10 while the latter was being stirred, whereby an aqueous dispersion having a kaolin concentration of 2 wt.% was prepared. Well water was used as the water. The aqueous dispersion contained Na$^+$ ions as principal counter ions and was a sedimentation-free stable dispersion.

A portion of the aqueous dispersion was sampled in a glass tube and was observed under stationary conditions. It was in a free sedimentation state so that no sedimentation interface was observed. The kaolin was found to consist of fine particles which did not sediment even when left over for 1 month. It was difficult to recover those fine particles even when a centrifugal separator was used.

A portion of the sedimentation-free aqueous dispersion was taken out, to which 10 ℓ of an H-type cation-exchange resin ("Duolite C20", trade name; product of Sumitomo Chemical Co., Ltd.) were added, followed by cation-exchange treatment until the pH value dropped to 4. After the treatment, the H-type cation-exchange resin was filtered off.

The aqueous dispersion obtained after the ion-exchange treatment changed to a bound sedimentation state, in which a sedimentation interface was observed, from the free sedimentation state in which no interface was observed. Upon an elapsed time of 3 days of natural sedimentation, the supernatant was removed. As a result, it was possible to concentrate the aqueous dispersion to 67 kg of a 20 wt.% slurry. One month later, a soft cake having a kaolin concentration of about 40 wt.% was obtained. It was only possible to obtain a similar soft cake when this concentration was effected in a short period by means of a centrifugal separator. The electrical conductivity of the supernatant was 85 μS/cm.

When the soft cake thus obtained was left over for 1 year, it did not undergo any changes and remained in the cream-like state. It did not become a hard cake.

It was easy to dry the soft cake. The dry particles thus obtained were re-dispersible. As a result of a microscopic investigation, the dry kaolin was found to contain much less secondary aggregates of particles compared with the starting kaolin.

From the above result, it is understood that kaolin can be recovered in the form of a soft cake by ion-exchanging counter ions with an H-type cation-exchange resin without adding a coagulant to an aqueous dispersion of kaolin. No classification was conducted in this example, so that the particle size distribution of the thus-obtained kaolin was substantially the same as that of the starting material as shown in Table 1.

By the process of Example 1, it is possible to obtain a purified pigment in which the total amount of electrolytes is not increased compared with the conventional sulfuric acid method in which sulfuric acid is used as a coagulant and counter ions and fine particles of the opposite polarity have been eliminated.

Comparative Example 1

In a similar manner to Example 1, 20 kg of the kaolin of Product b in Table 1 were gradually added to 1 ton of alkaline water of pH 10 while the latter was being stirred, whereby an aqueous dispersion having a kaolin concentration of 2 wt.% was prepared.

By a method known *per ser* in the art, sulfuric acid was added as a coagulating agent to adjust the pH to 4. The dispersion turned to a coagulated state and the kaolin began to sediment. After 3 days of natural sedimentation, the slurry was concentrated to 60 kg of a 33 wt.% slurry. One month later, the slurry however turned to a hard cake so that its handling was no longer feasible.

Thus, the slurry on the 4th day of the concentration was dewatered by a filter press. The particle size distribution of the thus-dried pigment is shown under Comparative Example 1 in Table 1. As a result, the particle size distribution was found unchanged from that of the starting pigment.

Example 2

In a similar manner to Example 1, 20 kg of the kaolin of Product b in Table 1 were gradually added to 1 ton of alkaline water of pH 10 in a tank while the latter was being stirred, whereby an aqueous dispersion having a kaolin concentration of 2 wt.% was prepared.

The aqueous dispersion contained small amounts of various anions such as Cl$^-$ contained inherently in the starting kaolin and SO$^{--}$ derived from sulfuric acid as a coagulant.

To the aqueous dispersion were added 10 ℓ of an OH-type anion-exchange resin ("Duolite A101", product of Sumitomo Chemical Co., Ltd.), so that the aqueous dispersion was subjected to anion-exchange treatment. The pH was stabilized at 10.5. It appears that anions in the aqueous dispersion were captured by the anion-exchange resin and OH⁻ ions were liberated in stead, resulting in the higher pH value. Incidentally, the OH-type anion-exchange resin was filtered off after the treatment.

The deflocculation of the kaolin particles in the aqueous dispersion was promoted further by the anion-exchange treatment.

The aqueous dispersion thus obtained was maintained as was, namely, in a free sedimentation state and the dispersion in the range of sedimentation distances corresponding to Stokes diameters of 0.6 $\mu$m and greater but not larger than 2 $\mu$m was separated. Described specifically, the aqueous dispersion was allowed to stand for 10 hours/10 cm, namely, 100 hours while the temperature of the dispersion was maintained at 10-13°C. Thereafter, the dispersion in the depth range of 9-100 cm from the water level was collected. To shorten the time, this sedimentation can be carried out by a continuous centrifugal separator called "decantor".

In a similar manner to Example 1, the dispersion thus collected was subjected to cation-exchange treatment with an H-type cation-exchange resin until its pH dropped to 4, whereby kaolin particles were caused to sediment. As a result, a soft cake (slurry) in which the sediment was concentrated was obtained. The particle size distribution of the kaolin in the soft cake is shown in Table 1, so that a substantial decrease in the fine particle fraction was observed (compared especially with Comparative Example 2 to be described below). The electrical conductivity of the supernatant was 37 $\mu$S/cm.

The slurry did not become harder at all even when left over for 1 year. Further, no particle aggregation was observed when the slurry was dried.

From an electronmicroscopic observation of the dried particles, particles in the range of 6 $\mu$m and greater were not observed at all as shown in Table 1. Further, as also given in Table 1, particles in the range of 2-6 $\mu$m and those in the range of 200-600 nm were confirmed to account for only small fractions.

The slurry had excellent thixotropic properties, permitted both storage and pump transportation, and was extremely easy to handle. When a freezing experiment was conducted thereon. it was not supercooled but was frozen at 0°C similarly to pure water. Further, it was easily converted to fine powder by spray drying. It was also easy to dry it by a conventional air drying method, so that it easily turned to powder. Those dry powders were easily dispersed in water, whereby they were reconverted to stable slurries again. When subjected to solvent substitution not only with water but also with various solvent such as hydrophilic solvents and hydrophobic solvents in accordance with a flushing method, good dispersions free of aggregation or coagulation were obtained unlike slurries obtained by conventional production processes respectively.

Incidentally, the slurry and sedimention residue, which corresponded to the sedimentation distances for Stokes diameters of 2 $\mu$m and greater, were utilized as a raw material to be added in the next deflocculation operation. The sedimentation residue was ground in a ball mill and then used, so that the starting kaolin was eventually deflocculated in its entirety. Therefore, the starting material was converted *in toto* to a pigment in the form of a soft cake having a Stokes diameter not greater than 2 $\mu$m.

Comparative Example 2

In a similar manner to Example 1, 20 kg of the kaolin of Product b̲ in Table 1 were gradually added to 1 ton of alkaline water of pH 10 in a tank while the latter was being stirred, whereby an aqueous dispersion having a kaolin concentration of 2 wt.% was prepared.

From the aqueous dispersion which was in a free sedimentation state, the dispersion in the range of sedimentation distances corresponding to Stokes diameters of 0.6 $\mu$m and greater but not greater than 2 $\mu$m was collected.

To the dispersion thus collected was added sulfuric acid as a coagulant in a manner known *per se* in the art, whereby the pH of the dispersion was lowered to 4. As a result, kaolin particles sedimented and a concentrated slurry was obtained.

The concentrated slurry was dewatered by a filter press, followed by drying to obtain a powdery pigment.

The particle size distribution of the dry kaolin thus obtained is shown under Comparative Example 2 in Table 1. Unexpectedly, it was substantially the same as the particle size distribution of Product a̲ available on the market. When classified depending on the differences in sedimentation velocity, the upper limit of the particle size was controllable. Particles of 2 $\mu$m and greater were made fewer to 7 wt.%, but the percentage of fine particles of 200 nm and smaller increased relatively. When observed electronmicroscopically, many aggregates of kaolin particles were observed and no primary particles of fine particles were present. It was not able to control the lower limit of the particle size because the electrolyte (sulfuric acid) was added.

Compared to Example 2, a percentage increase of particles in the range of 600-200 nm is observed.

Comparative Example 3

Twenty kilograms of Product b in Table 1 were gradually added to 1 ton of deionized water (electrical conductivity: 1 $\mu$S/cm) while the latter was being stirred, whereby an aqueous dispersion having a kaolin concentration of 2 wt.% was prepared.

The pH of the aqueous dispersion was 5.5. When the stirring was stopped, sedimentation started shortly and a sedimentation interface was observed. Since large particles and small particles coagulated and sedimented together, no classification was feasible.

Although certain washing effects are exhibited by the deionized water, the electrical conductivity of the supernatant gradually increased. It was extremely difficult to control the electrical conductivity below 50 $\mu$S/cm. This indicated that the deionization washing of the aggregates of particles did not proceeded to any sufficient extent.

Washing of a pigment with deionized water does not therefore lead to improvements of the quality of the pigment.

Comparative Example 4

In a similar manner to Example 1, 20 kg of the kaolin of Product b in Table 1 were gradually added to 1 ton of alkaline water of pH 10 in a tank while the latter was being stirred, whereby an aqueous dispersion having a kaolin concentration of 2 wt.% was prepared.

To conduct deionization, 10 $\ell$ of an H-type cation-exchange resin and 10 $\ell$ of an OH-type anion-exchange resin were both added to the aqueous dispersion, followed by agitation. The pH of the aqueous dispersion dropped to 5.5-6.7, namely, to approximately the neutral level, so that the deionization appeared to have been completed at first glance.

Kaolin particles however began to sediment, so that it was difficult to conduct the classification of the aqueous dispersion. The dispersion had extremely small pH-buffering ability because it was in the deionized state. The pH value therefore varied from one treatment operation to another, whereby poor reproducibility was exhibited in concentrating operations and the like. Although the electrical conductivity reached as low as 50 $\mu$S/cm or so as long as both the ion-exchange resins existed, the electrical conductivity gradually increased while the dispersion was left over after the removal of both the ion-exchange resins. Treatment over a substantial period of time is therefore required to lower the electrical conductivity to 50 $\mu$S/cm or lower. This requires an enormous cost.

From the foregoing, the mixed use of an H-type cation-exchange resin and an OH-type anion exchange resin has poor reproducibility and has difficulty in performing classification. It is also understood that a high-purity pigment can hardly be obtained in practice.

Example 3

Well water was treated with an OH-type anion-exchange resin to obtain alkaline water of pH 11. An analysis of the alkaline water by ion chromatography found that the concentrations of chloride ions and sulfate ions were trace, namely, 2 ppm and 3 ppm, respectively.

Twenty kilograms of Product b were gradually added to the alkaline water of pH 11 while the latter was being stirred, whereby an aqueous dispersion having a kaolin concentration of 2 wt.% was prepared. The aqueous dispersion had pH 10.3 and excellent dispersion stability.

The aqueous dispersion thus obtained was allowed to stand as was, namely, in a free sedimentation state, and in a similar manner to Example 2, the dispersion in the sedimentation distance range corresponding to Stokes diameters of 0.6 $\mu$m and greater but not greater than 2 $\mu$m was collected.

Then, using 10 $\ell$ of an H-type cation-exchange resin ("Duolite C20", trade name; product of Sumitomo Chemical Co., Ltd.), cation-exchange treatment was conducted until the pH value dropped to 4. The dispersion thus treated changed from the sedimentation state, in which kaolin particles were allowed to undergo free sedimentation, to a bound sedimentation state in which a sedimentation interface was observed. In 3 days of natural sedimentation, it was possible to concentrate the dispersion to 20 wt.%. The electrical conductivity of the supernatant dropped to 13 $\mu$S/cm, thereby indicating that deionization was conducted effectively.

The resultant pigment slurry was dewatered and easily dried, whereby 15 kg of a powdery pigment were obtained. The particle size distribution of the pigment is shown in Table 1.

An extremely sharp particle size distribution centering at the particle size range of 2 $\mu$m - 600 nm was shown. A microscopic observation indicated extremely little aggregations.

Example 4

Well water was treated with an OH-type anion-exchange resin, so that alkaline water of pH 11 was obtained.

Twenty kilograms of Product d were gradually added to the alkaline water of pH 11 while the latter was being stirred, whereby an aqueous dispersion having a kaolin concentration of 2 wt.% was prepared. The aqueous dispersion had pH 9.9 and excellent dispersion stability.

The aqueous dispersion thus obtained was allowed to stand as was, namely, in a free sedimentation state for 100 hours. An upper layer in the range of sedimentation distances corresponding to Stokes diameters smaller than 2 $\mu$m was discarded and the dispersion corresponding to Stokes diameters of 2 $\mu$m and greater but not greater than 6 $\mu$m was collected.

The aqueous dispersion thus collected was treated with an H-type cation-exchange resin, so that its pH value was lowered to 4.5. Bound sedimentation of kaolin particles started. The dispersion was then treated in a similar manner to Example 3, whereby 16 kg of a powdery pigment were obtained.

Its particle size distribution is shown in Table 1. An extremely sharp particle size distribution centering at the particle size range of 2-6 $\mu$m was shown. An electronmicroscopic observation indicated extremely little aggregations. The particles had substantially a uniform particle, most of which had a particle size of 5 $\mu$m.

The particle size distributions of the kaolins obtained above in Examples 1-4 and Comparative Examples 1-2 and those of the commercial kaolins are collectively shown in Table 1.

Example 5

This example demonstrates the application of a process of the present invention to a production process of a pigment in which naturally occurred ores are ground.

<u>Table 1</u>

Particle Size Distribution of Kaolin (wt.%)

| Range of particle size (d) | | 20 μm≤d<6 μm | 6 μm ≤d< 2 μm | 2 μm ≤d< 600 nm | 600 nm ≤d< 200 nm | d≤ 200 nm |
|---|---|---|---|---|---|---|
| Classification | | Silt | | Clay | | |
| Commercial kaolin pigment | Product a | | 8 | 36 | 47 | 9 |
| | Product b | 3 | 15 | 61 | 20 | 1 |
| | Product c | 9 | 30 | 49 | 12 | |
| | Product d | 12 | 54 | 27 | 7 | |
| Example 1 | | 3 | 16 | 63 | 17 | 1 |
| Comparative Example 1 | | 3 | 15 | 61 | 20 | 1 |
| Example 2 | | | 15 | 69 | 14 | 2 |
| Comparative Example 2 | | | 7 | 37 | 47 | 9 |
| Example 3 | | | 8 | 80 | 12 | |
| Example 4 | | 9 | 79 | 12 | | |

Agalmatolite is ground, classified by hydraulic elutriation, dewatered, dried and then ground, whereby clay is produced as white powder.

Chlorine gas is used to enhance the whiteness and also to promote the sedimentation after the hydraulic elutriation. The resultant clay powder is washed to prevent the chlorine gas from remaining in the clay. However, this washing is not sufficient. As a result, clay bleached with chlorine gas induces corrosion when brought into contact with metals, so that clay itself has been considered to be corrosive.

When no bleaching was needed, a suspension (water dispersion) before the injection of chlorine gas was subjected to cation-exchange treatment with an H-type cation-exchange resin in a similar manner to Example 1. As a result, it was possible to adjust the pH to 4. It was therefore possible to promote the sedimentation of clay particles. Moreover, the resultant concentrated slurry was in the form of a soft cake.

This method develops no problem or inconvenience even when the operation is terminated in the course of the treatment reaction. Even when the treatment time becomes excessively long, there is no danger unlike chlorine gas. The process control can therefore be performed safely and easily.

When bleaching was needed, a 3 wt.% suspension of a clay product already breached with chlorine gas was subjected to anion-exchange treatment with an OH-type anion-exchange resin so that the pH increased to 11.9. The clay particles were therefore deflocculated and the suspension changed to a free sedimentation state in which no sedimentation interface was observed.

The aqueous dispersion thus obtained was allowed to stand as was, namely, in the free sedimentation state, and an upper layer in the range of sedimentation distances corresponding to Stokes diameter smaller than 2 $\mu$m was collected.

The dispersion thus collected was subjected to cation-exchange treatment with an H-type cation-exchange resin until its pH dropped to 4, whereby clay particles were caused to sediment. As a result, a soft cake in which the sediment was concentrated was obtained.

The electrical conductivity of the supernatant was 43 $\mu$S/cm. Chlorine ion components which would give adverse effects to the corrosion of metals were hence successfully eliminated.

Example 6

A great deal of effluent containing clay occurs from the mill of each agalmatolite mine. The sedimentation velocity of particles in the clay range of Stokes diameters not greater than 2 $\mu$m is as slow as about 1 cm per hour. According to the conventional effluent treatment method, a flocculant called "thickener" is added to have them sedimented, and the sediment is dewatered by a filter press and is then recovered. The clay obtained by conducting such flocculation treatment as described above can be easily dewatered. However, it has to be discarded or is used only as roofing tiles and bricks.

The above effluent (300 tons) whose solid concentration was 5 wt.% was brought into contact with an OH-type anion-exchange resin and the anion-exchange treatment was continued until the pH increased to 10.5. Deflocculation of the clay particles was promoted. After holding the resultant dispersion for 10 hours in a free sedimentation state, the upper layer in the depth range of 40 cm from the water level was collected. The aqueous dispersion thus collected was brought into contact with an H-type cation-exchange resin and the cation-exchange treatment was continued until the pH dropped to 4.

The clay particles were allowed to sediment and then recovered. As a result, 1.5 tons of sericite clay of predominantly a flattened crystalline structure were obtained. This can be attributed to the deflocculation promoted as a result of the elimination of anions as a cause for coagulation.

Next, the upper layer in the range of from the water level of the remaining aqueous dispersion to the depth of 90 cm was collected. It was similarly treated with an H-type cation-exchange resin, whereby 7.0 tons of good kaolin clay having particle sizes not greater than 6 $\mu$m were obtained.

The residue obtained after those operations did not contain clay and had a low viscosity, The residue therefore had the merit that its handling was easy.

A still greater merit resides in that the used water (supernatant) can be recycled and reused, so that no effluent is discharged into the river, the supply of fresh water can be minimized, and the treatment can be conducted even with rain water. Further, the millsite can be chosen within the mine itself although it must conventionally be in a valley. An apparatus with a built-in centrifugal separator is convenient, so that clay can be washed at the mining site of ores and the washing effluent can be classified and concentrate there.

The application of the process of the present invention is not limited to agalmatolite mines. It can be applied to all mines of natural resources where a discharge of clay takes place, and further to voluminous industrial effluents.

Example 7

As an application example common to pigments composed respectively of the oxides or hydroxides of metals such as magnesium, aluminum, titanium, vanadium, iron, cobalt, nickel, copper, zinc and lead, a production process of an iron oxide pigment having a red iron oxide color will be described by way of example.

The color tone of red iron oxide ranges from an orange yellow color to a purple color and is dependent on the size of particles. Red iron oxide having particle sizes of 0.1-0.1 $\mu$m has a yellow color. The greater the particle size, the more reddish the color. A purple color is obtained when the particle size increases to 0.5-1.0 $\mu$m. The color tone is affected by not only the size of primary particles but also that of secondary aggregates of particles. When the particle size becomes smaller than 0.1 $\mu$m, it is about 1/4 to 1/6 of the wavelengths of visible light so that the red iron oxide no longer has hiding power and becomes clear iron oxide.

Post treatment or processing steps such as water washing, drying and grinding are usually more important that synthesis conditions. Deionizing washing has already been attempted. However, it can bring about only a little effect compared to the extra cost required.

Ten kilograms of commercial purple iron oxide were treated in accordance with the process of the present invention.

Since the synthesis reaction mixture was expected to still contain anions at high concentrations, alkaline water whose pH had been adjusted to 10.5 by using an OH-type anion-exchange resin was used. Ten kilograms of the purple iron oxide were dispersed in the alkaline water, whereby an aqueous dispersion having a 2 wt.% concentration was obtained.

The aqueous dispersion thus obtained was further treated with an OH-type anion-exchange resin to raise its pH to 10.7, whereby the anions contained in the aqueous dispersion were sufficiently eliminated and the deflocculation of iron oxide particles was also promoted.

Purple iron oxide particles were deflocculated and aggregates of particles became practically unobservable, so that the dispersion changed to a free sedimentation state in which no sedimentation interface was observed.

The resultant aqueous dispersion was classified in accordance with particle sizes defined in terms of Stokes' diameters. Each collected fraction of the aqueous dispersion was then treated with an H-type cation-exchange resin to lower its pH to 4. Accordingly, iron ore particles were sedimented, concentrated and recovered.

As a result of the classification, 9.1 kg of a vivid purple iron oxide pigment was recovered, while yellow and red iron ore pigments were each obtained in an amount of about 0.6 kg.

Example 8

Different from acidic pigments, basic pigments such as carbonates, e.g., calcium carbonate and lead carbonate, and hydrotalcite are deflocculated into suspensions when acidified.

Sodium remains in basic pigments contain sodium. It is difficult to sufficiently eliminate sodium by washing such basic pigments with water. Further, basic pigments contain a lot of aggregates. Under the circumstances, these basic pigments cannot be mixed in paints, plastics, rubber and the like unless a special machine or dispersant is used.

A description will next be made of fine particles of calcium carbonate as exemplary basic particles.

Twenty kilograms of commercial heavy calcium carbonate were added to 1 ton of well water while the latter was being stirred, whereby an aqueous dispersion was prepared.

Firstly, to eliminate cations of the same charge as calcium carbonate charged in positive, the aqueous dispersion was subjected to cation-exchange treatment by using 10 ℓ of an H-type cation-exchange resin. Carbon dioxide gas was then blown to lower the pH to 4, whereby the suspension was stabilized in a free sedimentation state.

While the suspension was retained in the free sedimentation state in which no sedimentation interface was observed, the upper suspension corresponding to the Stokes' diameter of 2 $\mu$m was collected by making use of the differences in sedimentation velocity among particles. The suspension thus collected was treated with an OH-type anion-exchange resin, whereby carbonate ions in the suspension were attracted and the pH was raised to 10 or higher. The suspension then changed from the free sedimentation state to a bound sedimentation state in which a sedimentation interface was observed. Particles of calcium carbonate were concentrated and recovered by natural sedimentation. The slurry thus concentrated did not become a hard cake. Further, a microscopic observation of the dried particles indicated the inclusion of only a little particle aggregates.

Example 9

Classification of hydrotalcite as basic particles will next be described.

Aluminum hydroxide and magnesium hydroxide were dissolved in an aqueous solution of sodium carbonate. While blowing carbon dioxide gas in the resulting solution, the solution was heated to 80°C so that hydrotalcite was caused to precipitate.

The thus-precipitated particles were separated, washed with water, dried and then ground. Many aggregates as large as 10 $\mu$m were formed even when the purity of the washing water was increased. It was therefore impossible to collect desired primary particles of 1 $\mu$m and smaller.

Therefore, the hydrotalcite thus precipitated was collected by filtration in a usual manner and then washed with water, whereby a slurry having a concentration of 20 wt.% was obtained. To 1 ton of water were added 100 kg of the slurry while the former was being stirred, so that an aqueous dispersion was prepared.

Firstly, to eliminate cations of the same charge as hydrotalcite, 10 $\ell$ of an H-type cation-exchange resin were added to conduct cation-exchange treatment. As a result, cations such as sodium ions, magnesium ions and aluminum ions in the synthesis rection mixture were exchanged with $H^+$ ions so that the dispersion was acidified to have pH 4.6, whereby the dispersion became a free sedimentation state. The H-type cation-exchange resin was filtered off.

In the free sedimentation state, the particles were classified in accordance with prescribed sedimentation velocities by using the differences in sedimentation velocity among the particles. Namely, the upper suspension having the sedimentation velocity corresponding to the Stokes diameter of 2 $\mu$m was collected and anions such as carbonate ions in the suspension were exchanged with $OH^-$ ions by an OH-type anion-exchange resin, so that the pH of the suspension was raised to 8.6 or higher. Then, the suspension changed from the free sedimentation state to a bound sedimentation state. Hydrotalcite particles were concentrated and recovered by free sedimentation.

The concentrated slurry thus obtained was in the form of a soft cake. Further, a microscopic observation of the dried particles indicated the inclusion of only a little particle aggregates.

The dried particles dispersed in a paint resin formulation by a simple agitator without the need for any special dispersing machine, whereby a corrosion-preventive paint was easily formulated.

Referential Example 1

A description will hereinafter be made of applications of purified pigments, which had been obtained by the process of the present invention, to paints.

(1) Mixing and Dispersion in Paint Resins:

Purchased were zinc white, lead white, lithopone and titanium oxide as white pigments; minium, chrome yellow and cadmium yellow as yellow pigments; ultramarine as a blue pigment; and red iron oxide as a red pigment. Each of the pigments was treated by the process of the present invention, namely, was successively subjected to ion-exchange treatment in which the particles of the pigment were deflocculated, classification, and then ion-exchange treatment in which counter ions were exchanged, whereby pigment particles and aggregates of 6 $\mu$m and greater, fine particles not greater than 0.2 $\mu$m and electrolytes were eliminated.

The pigments obtained by the process of the present invention were all successfully mixed and dispersed in a commercial paint resin varnish for handicraft by a simple agitator, so that various uniform and smooth paints were easily formulated. In contrast, the untreated commercial pigments remained uneven and were not sufficiently mixed and dispersed.

The dry pigments obtained by the process of the present invention can be easily mixed and dispersed in a boiled oil, so that oil colors capable of meeting various colors can be obtained. Since each pigment had a sharp particle size distribution, it exhibited the characteristic feature that its color tone was more vivid compared with the corresponding untreated product.

17

(2) Water-Base Paints:

Purified pigments obtained by the process of the present invention were easily mixed, in the forms of aqueous slurries, in water-base acrylic emulsions available on the market.

Paints obtained by mixing various purified pigments in commercial water-base clear paints containing a drying oil such as tung oil, linseed oil or a synthetic oil were suited for coating methods such as brushing and curtain coating. Especially, the coating work was smooth owing to their excellent thixotropic properties. Because of the exclusion of coarse particles, coating defects such as spitting, cissing and cratering did not occur on the coated surfaces.

(3) Corrosion Preventive Function of Coatings:

Even when a conventional pigment is used, the use of a powerful dispersing machine makes it possible to avoid the occurrence of apparent coating defects such as spitting, cissing and/or cratering on the coated surface. When a steel plate is coated, rusting and blistering however take place in a 10-day salt spray test.

In contrast, paints making use of purified pigments obtained in accordance with the process of the present invention were all able to provide excellent protective coatings substantially free from rusting and blistering.

For the sake of reference, rusting and blistering occurred when a purified pigment according to the present invention was used after treating it with 0.1% saline. This has demonstrated that sodium chloride as an electrolyte accelerates aggregation of pigments and corrosion of metals and the elimination of this troublesome material is indispensable.

(4) Electrochemical Phenomena:

A purified pigment according to the present invention was mixed, in the form of a concentrated slurry, in a commercial water-base acrylic emulsion. The resulting water-base paint was diluted with deionized water to 15 wt.% and controlled at 25°C. A steel plate was centrally suspended in a 2-$\ell$ stainless steel beaker. Using the steel plate and beaker as a cathode and an anode, respectively, a d.c. voltage of 50 V was applied. The steel plate was pulled out, washed with water and then dried, so that a uniform electrodeposition coating of 30 $\mu$m thick was formed.

The successful electrodeposition coating in spite of the use of the commercial water-base acrylic emulsion indicates that an aqueous slurry of a purified pigment of this invention is particularly convenient for electro-coating paints which are extremely apt to be easily impaired by the inclusion of electrolytes. Purified pigments according to the present invention are especially advantageous for electrodeposition coating in which each pigment is used at a high concentration.

(5) Structural Characteristics of Particles:

Kaolin and hydrotalcite are both known as ion-exchangers of a layer structure. They have high hydrophilicity and also high water, ion and air permeability.

Accordingly, it has not been believed that the inclusion of one or more of these pigments in a paint would result in a coating with enhanced rust-preventive function. They have been mixed as mere extenders in rust preventive paints.

A comparative paint was formulated by dispersing an untreated pigment in a commercial clear handicraft paint in a ball mill. Further, invention paints were formulated by dispersing the purified pigments of the present invention (the purified kaolin obtained in Example 2 and the purified hydrotalcite obtained in Example 9), respectively in the same commercial clear handicraft paint in the ball mill. Steel plates were individually coated with the clear handicraft paint and the paints under the same conditions.

Those coated steel plates were exposed to outdoor light and was sprayed with saline of the same composition as sea water for one minute every day. The steel plates coated with the commercial clear handicraft paint and the comparative paint, respectively developed severe localized rusting under the respective coatings from defective parts of the coatings after the exposure for 3 months.

In contrast, the steel plates coated with the invention paints, respectively were free from such severe rusting underneath the coatings. The invention paints were therefore mush superior in overall aesthetic appearance and protecting function.

This seems to be attributable to the characteristic layer structure of the purified pigments. Further, each coating appears to have been imparted with ion-exchanging properties so that the localization of $Na^+$ and the like and the localization of Cl$^-$ , which would cause cathodic exfoliation and anodic dissolution respectively, were prevented. As a consequence, the separation of the coatings applied on the steel plates seems to have been reduced, so that localized corrosion seems to have been inhibited.

## Claims

1.  A process for the production of a purified pigment, which comprises a step which consists of bringing an aqueous dispersion of pigment particles into contact with (a) an H-type cation-exchange resin where the pigment particles are acidic particles and counter ions thereof are cations, thereby having the counter ions exchanged with H$^+$ ions and lowering the pH of the aqueous dispersion or (b) an OH-type anion-exchange resin where the pigment particles are basic particles and counter ions thereof are anionic, thereby having the counter ions exchanged with OH$^-$ ions and raising the pH of the aqueous dispersion, whereby the dispersion stability of the pigment particles is destroyed to have the pigment particles sedimented and separated without fine particles of opposite polarity contained as impurities in the aqueous dispersion.

2.  The process of claim 1, wherein the aqueous dispersion of the pigment particles is brought into contact with the H-type cation-exchange resin to lower the pH of the aqueous dispersion to 6 or lower where the pigment particles are acidic particles or is brought into contact with the OH-type anion-exchange resin to raise the pH of the aqueous dispersion to 8 or higher where the pigment particles are basic particles.

3.  The process of claim 1 or 2, wherein the aqueous dispersion of the pigment particles has been deflocculated.

4.  The process of claim 3, which additionally comprises a step wherein water to be used for the preparation of the aqueous dispersion of the pigment particles and/or an aqueous dispersion of pigment particles is brought into contact with (a) an OH-type anion-exchange resin where the pigment particles are acidic particles, thereby exchanging anions, which are present in the water and/or the aqueous dispersion, with OH$^-$ to raise the pH of the water and/or the aqueous dispersion or (b) an H-type cation-exchange resin where the pigment particles are basic particles, thereby exchanging cations, which are present in the water and/or the aqueous dispersion, with H$^+$ to lower the pH of the water and/or the aqueous dispersion, whereby an aqueous dispersion with pigment particles deflocculated therein is provided.

5.  The process of claim 4, wherein the water to be used for the preparation of the aqueous dispersion of the pigment particles and/or the aqueous dispersion of the pigment particles is brought into contact with (a) an OH-type anion-exchange resin to raise the pH of the aqueous dispersion to 8 or higher where the pigment particles are acidic particles or (b) an H-type cation-exchange resin to lower the pH of the aqueous dispersion to 6 or lower, whereby an aqueous dispersion with the pigment particles deflocculated therein is provided.

6.  The process of any preceding claim, additionally comprising a step wherein the aqueous dispersion of the pigment particles is classified by allowing a starting aqueous dispersion of starting pigment particles to stand and then collecting a portion of the resulting dispersion, said portion being located within a predetermined height range.

7.  A process for the production of a classified and purified pigment, which comprises the following steps (1) to (3):
    (1) the step recited in claim 4;
    (2) the step recited in claim 6;
    (3) the step recited in claim 1.

8.  The process of claim 7, wherein in step (1), the water and/or the aqueous dispersion is brought into contact with (a) the OH-type anion-exchange resin to raise the pH of the aqueous dispersion to 8 or higher where the pigment particles are acidic particles or (b) the H-type cation-exchange resin to lower the pH of the aqueous dispersion to 6 or lower, whereby an aqueous dispersion with the pigment particles deflocculated therein is provided.

9. The process of claim 7 or 8, wherein the thus-collected aqueous dispersion of the pigment particles is brought into contact with (a) the H-type cation-exchange resin to lower the pH of the aqueous dispersion to 6 or lower where the pigment particles are acidic particles or (b) the OH-type anion-exchange resin to raise the pH of the aqueous dispersion to 8 or higher where the pigment particles are basic particles, whereby the dispersion stability of the pigment particles is destroyed.

10. The process of any of claims 7 to 9, wherein a supernatant formed after having the purified pigment particles sedimented from the aqueous dispersion of the pigment particles is reused as water for the preparation of an aqueous dispersion of pigment particles.

11. The process of any of claims 7 to 10, wherein the supernatant formed after having the purified pigment particles sedimented from the aqueous dispersion of the pigment particles has an electrical conductivity not higher than 100 $\mu$S/cm.

12. The process of claim 11, wherein the supernatant has an electrical conductivity not higher than 25 $\mu$S/cm.

**Patentansprüche**

1. Verfahren zur Herstellung eines gereinigten Pigments, umfassend eine Stufe, die besteht aus dem In-Berührung-Bringen einer wäßrigen Pigmentteilchen-Dispersion mit (a) einem Kationenaustauscherharz vom H-Typ, wenn die Pigmentteilchen saure Teilchen sind und Gegenionen davon Kationen sind, wodurch man die Gegenionen durch $H^+$-Ionen austauschen läßt und den pH der wäßrigen Dispersion senkt, oder (b) einem Anionenaustauscherharz vom OH-Typ, wenn die Pigmentteilchen basische Teilchen sind und Gegenionen davon anionisch sind, wodurch man die Gegenionen durch $OH^-$-Ionen austauschen läßt und den pH der wäßrigen Dispersion anhebt, wodurch die Dispersionsstabilität der Pigmentteilchen zerstört wird, um die Pigmentteilchen ohne in der wäßrigen Dispersion als Verunreinigungen enthaltene Feinteilchen von entgegengesetzter Ladung sedimentieren und abtrennen zu lassen.

2. Verfahren nach Anspruch 1, in welchem die wäßrige Pigmentteilchen-Dispersion mit dem Kationenaustauscherharz vom H-Typ in Berührung gebracht wird, um den pH der wäßrigen Dispersion auf 6 oder niedriger zu senken, wenn die Pigmentteilchen saure Teilchen sind, oder mit dem Anionenaustauscherharz vom OH-Typ in Berührung gebracht wird, um den pH der wäßrigen Dispersion auf 8 oder höher anzuheben, wenn die Pigmentteilchen basische Teilchen sind.

3. Verfahren nach Anspruch 1 oder 2, in welchem die wäßrige Pigmentteilchen-Dispersion entflockt worden ist.

4. Verfahren nach Anspruch 3, zusätzlich umfassend eine Stufe, in welcher für die Herstellung der wäßrigen Pigmentteilchen-Dispersion zu verwendendes Wasser und/oder eine wäßrige Pigmentteilchen-Dispersion in Berührung gebracht wird mit (a) einem Anionenaustauscherharz vom OH-Typ, wenn die Pigmentteilchen saure Teilchen sind, wodurch man Anionen, die in dem Wasser und/oder der wäßrigen Dispersion enthalten sind, durch $OH^-$ austauscht, um den pH des Wassers und/oder der wäßrigen Dispersion anzuheben, oder (b) einem Kationenaustauscherharz vom H-Typ, wenn die Pigmentteilchen basische Teilchen sind, wodurch man Kationen, die in dem Wasser und/oder der wäßrigen Dispersion vorhanden sind, durch $H^+$ austauscht, um den pH des Wassers und/oder der wäßrigen Dispersion zu senken, wodurch eine wäßrige Dispersion mit darin entflockten Pigmentteilchen bereitgestellt wird.

5. Verfahren nach Anspruch 4, in welchem das für die Herstellung der wäßrigen Pigmentteilchen-Dispersion zu verwendende Wasser und/oder die wäßrige Pigmentteilchen-Dispersion in Berührung gebracht wird mit (a) einem Anionenaustauscherharz vom OH-Typ, um den pH der wäßrigen Dispersion auf 8 oder höher anzuheben, wenn die Pigmentteilchen saure Teilchen sind, oder (b) einem Kationenaustauscherharz vom H-Typ, um den pH der wäßrigen Dispersion auf 6 oder niedriger zu senken, wodurch eine wäßrige Dispersion mit den darin entflockten Pigmentteilchen bereitgestellt wird.

6. Verfahren nach irgendeinem der vorangehenden Ansprüche, zusätzlich umfassend eine Stufe, in welcher die wäßrige Pigmentteilchen-Dispersion klassiert wird, indem man eine wäßrige Ausgangs-Dispersion von Ausgangs-Pigmentteilchen stehen läßt und dann einen Teil der resultierenden Dispersion sammelt, wobei dieser Teil innerhalb eines vorher festgelegten Höhenbereichs lokalisiert ist.

7. Verfahren zur Herstellung eines klassierten und gereinigten Pigments, umfassend die folgenden Stufen (1) bis (3):
    (1) die in Anspruch 4 aufgeführte Stufe;
    (2) die in Anspruch 6 aufgeführte Stufe;
    (3) die in Anspruch 1 aufgeführte Stufe.

8. Verfahren nach Anspruch 7, in welchem in Stufe (1) das Wasser und/oder die wäßrige Dispersion in Berührung gebracht wird mit (a) dem Anionenaustauscherharz vom OH-Typ, um den pH der wäßrigen Dispersion auf 8 oder höher anzuheben, wenn die Pigmentteilchen saure Teilchen sind, oder (b) dem Kationenaustauscherharz vom H-Typ, um den pH der wäßrigen Dispersion auf 6 oder niedriger zu senken, wodurch eine wäßrige Dispersion mit den darin entflockten Pigmentteilchen bereitgestellt wird.

9. Verfahren nach Anspruch 7 oder 8, in welchem die so gesammelte wäßrige Pigmentteilchen-Dispersion in Berührung gebracht wird mit (a) dem Kationenaustauscherharz vom H-Typ, um den pH der wäßrigen Dispersion auf 6 oder niedriger zu senken, wenn die Pigmentteilchen saure Teilchen sind, oder (b) dem Anionenaustauscherharz vom OH-Typ, um den pH der wäßrigen Dispersion auf 8 oder höher anzuheben, wenn die Pigmentteilchen basische Teilchen sind, wodurch die Dispersionsstabilität der Pigmentteilchen zerstört wird.

10. Verfahren nach irgendeinem der Ansprüche 7 bis 9, in welchem ein nach dem Sedimentierenlassen der gereinigten Pigmentteilchen aus der wäßrigen Pigmentteilchen-Dispersion gebildeter Überstand als Wasser für die Herstellung einer wäßrigen Pigmentteilchen-Dispersion wiederverwendet wird.

11. Verfahren nach irgendeinem der Ansprüche 7 bis 10, in welchem der nach dem Sedimentierenlassen der gereinigten Pigmentteilchen aus der wäßrigen Pigmentteilchen-Dispersion gebildete Überstand eine elektrische Leitfähigkeit von nicht höher als 100 $\mu$S/cm aufweist.

12. Verfahren nach Anspruch 11, in welchem der Überstand eine elektrische Leitfähigkeit von nicht höher als 25 $\mu$S/cm aufweist.

**Revendications**

1. Un procédé de production d'un pigment purifié, qui comprend une étape qui consiste à amener une dispersion aqueuse de particules de pigment en contact avec (a) une résine échangeuse de cations du type H dans laquelle les particules de pigment sont des particules acides et les contre-ions sont des cations, pour échanger les contre-ions avec les ions $H^+$ et pour abaisser le pH de la dispersion aqueuse ou bien (b) avec une résine échangeuse d'anions du type OH dans laquelle les particules de pigment sont des particules basiques et les contre-ions sont anioniques, pour échanger les contre-ions avec les ions $OH^-$ et pour élever le pH de la dispersion aqueuse, de sorte que la stabilité de la dispersion des particules de pigment est détruite pour avoir les particules de pigment sédimentées et séparées sans les particules fines de polarité opposée contenues comme impuretés dans la dispersion aqueuse.

2. Le procédé selon la revendication 1, selon laquelle la dispersion aqueuse des particules de pigment est amenée en contact avec la résine échangeuse de cations du type H pour abaisser le pH de la dispersion aqueuse à 6 ou moins dans laquelle les particules de pigment sont des particules acides ou est amenée en contact avec la résine échangeuse d'anions de type OH pour élever le pH de la dispersion aqueuse à 8 ou plus dans laquelle les particules de pigment sont des particules basiques.

3. Le procédé selon la revendication 1 ou 2, selon laquelle la dispersion aqueuse de particules de pigment a été défloculée.

4. Le procédé selon la revendication 3, qui comprend additionnellement une étape selon laquelle l'eau à utiliser pour la préparation de la dispersion aqueuse des particules de pigment et/ou une dispersion aqueuse des particules de pigment est amenée en contact avec (a) une résine échangeuse d'anions de type OH dans laquelle les particules de pigment sont des particules acides, pour échanger des anions, qui sont présents dans l'eau et/ou dans la dispersion aqueuse, avec OH⁻ pour élever le pH de l'eau et/ou de la dispersion aqueuse ou bien (b) avec une résine échangeuse de cations de type H dans laquelle les particules de pigment sont des particules basiques, pour échanger des cations, qui sont présents dans l'eau et/ou dans la dispersion aqueuse, avec H⁺ pour abaisser le pH de l'eau et/ou de la dispersion aqueuse, de façon à former une dispersion aqueuse avec des particules de pigment défloculées.

5. Le procédé selon la revendication 4, selon laquelle l'eau à utiliser pour la préparation de la dispersion aqueuse des particules de pigment et/ou la dispersion aqueuse des particules de pigment est amenée en contact avec (a) une résine échangeuse d'anions de type OH pour élever le pH de la dispersion aqueuse à 8 ou plus dans laquelle les particules de pigment sont des particules acides ou bien (b) avec une résine échangeuse de cations de type H pour abaisser le pH de la dispersion aqueuse à 6 ou moins, de façon à former une dispersion aqueuse avec les particules de pigment défloculées.

6. Le procédé selon l'une quelconque des revendications précédentes, comprenant additionnellement une étape selon laquelle la dispersion aqueuse des particules de pigment est classifiée en laissant au repos une dispersion aqueuse de départ de particules de pigment et ensuite en recueillant une portion de la dispersion résultante, ladite portion étant localisée à l'intérieur d'un intervalle de hauteur prédéterminé.

7. Un procédé pour la production d'un pigment classifié et purifié qui comprend les étapes suivantes (1) à (3) :
   (1) l'étape récitée dans la revendication 4 ;
   (2) l'étape récitée dans la revendication 6 ;
   (3) l'étape récitée dans la revendication 1.

8. Le procédé selon la revendication 7, selon laquelle dans l'étape (1), l'eau et/ou la dispersion aqueuse est amenée en contact avec (a) la résine échangeuse d'anions de type OH pour élever le pH de la dispersion aqueuse à 8 ou plus dans laquelle les particules de pigment sont des particules acides ou bien (b) avec la résine échangeuse de cations de type H pour abaisser le pH de la dispersion aqueuse à 6 ou moins, de façon à former une dispersion aqueuse avec les particules de pigment défloculées.

9. Le procédé selon la revendication 7 ou 8, selon laquelle la dispersion aqueuse ainsi recueillie des particules de pigment est amenée en contact avec (a) la résine échangeuse de cations de type H pour abaisser le pH de la dispersion aqueuse à 6 ou moins dans laquelle les particules de pigment sont des particules acides ou bien (b) avec la résine échangeuse d'anions de type OH pour élever le pH de la dispersion aqueuse à 8 ou plus dans laquelle les particules de pigment sont des particules basiques, de façon à détruire la stabilité de dispersion des particules de pigment.

10. Le procédé selon l'une quelconque des revendications 7 à 9, selon laquelle un liquide surnageant formé après sédimentation des particules de pigment purifiées de la dispersion aqueuse de particules de pigment est réutilisé comme eau pour la préparation d'une dispersion aqueuse des particules de pigment.

11. Le procédé selon l'une quelconque des revendications 7 à 10, selon laquelle le liquide surnageant formé après sédimentation des particules de pigment purifiées de la dispersion aqueuse de particules de pigment a une conductivité électrique non supérieure à 100 $\mu$S/cm.

12. Le procédé selon la revendication 11, selon laquelle le liquide surnageant a une conductivité électrique non supérieure à 25 $\mu$S/cm.

22